# EUROPÄISCHE PATENTANMELDUNG

(11) **EP 1 076 451 A2**
(43) Veröffentlichungstag der Anmeldung: **14.02.2001**
(21) Anmeldenummer: 00116950.7
(22) Anmeldetag: 07.08.2000
(51) Int. Cl.: H04N 1/32

(54) **Verschlüsselung bei digitalen Bildspeicherungseinrichtungen**

(30) Priorität: 10.08.1999 DE 19937658
(71) Anmelder: Robot Foto & Electronic GmbH & Co KG, D-40597 Düsseldorf (DE)
(72) Erfinder: Guse, Wolfgang, 31141 Hildesheim (DE); Schmitz, Thomas, 30853 Langenhagen (DE)
(74) Vertreter: Weisse, Jürgen, Dipl.-Phys.

(57) **Zusammenfassung**

Die Erfindung betrifft eine digitale Bildspeichereinrichtung (12), welche einen Bilderzeuger (22) zum Erzeugen digitaler Bilddaten, Datenerzeuger (28; 46; 50) zum Erzeugen von zu den Bilddaten korrelierenden digitalen Daten, einen Bild- und Datenspeicher (40), sowie Bild- und Datenverarbeitungsmittel (32; 56) enthält zum Verschlüsseln von digitalen Bild- und Meßdaten. Weiterhin betrifft die Erfindung ein Verfahren zur Sicherung von digitalen Bilddaten und korrelierenden digitalen Daten in einer Bildspeichereinrichtung (12).

## Beschreibung

### Technisches Gebiet

Die Erfindung betrifft ein digitale Bildspeichereinrichtung, enthaltend
a) einen Bilderzeuger zum Erzeugen digitaler Bilddaten,
b) Datenerzeuger zum Erzeugen von zu den Bilddaten korrelierenden digitalen Daten,
c) einen Bild- und Datenspeicher,
d) Bild- und Datenverarbeitungsmittel.

Weiterhin betrifft die Erfindung ein Verfahren zur Sicherung von digitalen Bilddaten und korrelierenden digitalen Daten in einer Bildspeichereinrichtung.

### Stand der Technik

Es sind Digitalkameras bekannt, die digitale Bilder erzeugen. Diese Digitalkameras werden mittlerweile auch in Verkehrsüberwachungseinrichtungen eingesetzt. Mit diesen Verkehrsüberwachungseinrichtungen werden beispielsweise Verkehrsübertretungen, wie Geschwindigkeitsüberschreitungen oder Rotlichtüberfahren überwacht. Die Digitalkameras erfassen dazu das Fahrzeug, welches die Verkehrswidrige Handlung begeht, als digitales Bild. Weiterhin werden Geschwindigkeitsdaten im Fall der Geschwindigkeitsüberwachung erzeugt, die von Geschwindigkeitssensoren gemessen werden.

Für die spätere Beweiskraft von solchen Bildern vor Gericht müssen auch Datums-, genaue Uhrzeits- und gegebenenfalls Ortsdaten erzeugt werden. Diese Meßdaten werden mit den Bilddaten in einem Speicher gespeichert, von wo sie schließlich ausgelesen weiterverarbeitet werden können. Diese Art der Erfassung von Verkehrsübertretungen ist für die spätere Weiterbearbeitung mit einer Datenverarbeitungsanlage sehr vorteilhaft. Die erzeugten Bilder brauchen nämlich nun nicht mehr, wie bei der herkömmlichen Negativfilmtechnik, entwickelt werden. Weiterhin müssen die Meßdaten nicht mehr in das Bild mühsam eingespiegelt werden etc. Diese und andere Vorteile der digitalen Bild- und Meßdatenverarbeitung ist auch auf anderen Gebieten bekannt.

Die ausgelesenen und auszuwertenden digitalen Daten und Bilddaten haben jedoch den Nachteil, daß die Daten vor Gericht keine Beweiskraft haben, weil sie für Manipulationen zu anfällig sind. Es werden daher noch zusätzliche herkömmliche Fotokameras mit Negativfilmtechnik in der Verkehrsüberwachungseinrichtung installiert, um ein weniger manipulationsanfälliges Medium vorweisen zu können, daß insbesondere vor Gericht als Beweismittel anerkannt wird.

### Offenbarung der Erfindung

Aufgabe der Erfindung ist es daher, manipulationssichere digitale Bilddaten und Meßdaten zu erzeugen, die auch vor Gericht als Beweismittel anerkannt werden können.

Erfindungsgemäß wird die Aufgabe dadurch gelöst, daß bei einer digitalen Bildspeicherungseinrichtung der eingangs genannten Art
d) Mittel zum Zusammenfassen der digitalen Bilddaten mit den korrelierenden digitalen Daten in einer digitalen Containerdatei und
f) Codiermittel zum verschlüsseln dieser Containerdatei in der digitalen Bildspeichereinrichtung vorgesehen sind.

Weiterhin wird die Aufgabe durch ein Verfahren der eingangs genannten Art mit folgenden Verfahrensschritten gelöst:
a) Zusammenfassen der digitalen Bilddaten und die korrelierenden digitalen Daten in einer Containerdatei und
b) Verschlüsseln dieser Containerdatei.

Die Erfindung beruht auf dem Prinzip, daß die erzeugten Bilddaten und Meßdaten bereits an dem Ort ihres Entstehens in einer Containerdatei zusammengefaßt und derart verschlüsselt werden, daß eine Manipulation durch Unbefugte ausgeschlossen werden kann.

Die Bilddaten werden in entsprechenden digital codierten Bildformaten im Bild- und Datenspeicher abgelegt. Zu solchen Bildformaten zählen komprimierte und unkompremierte Formate, wie sie auch häufig im Internet verwendeten werden, wie z.B. JPEG, TIFF, BMP, PCT, GIF, PCX, EPS etc. In diesem Bild- und Datenspeicher werden ebenfalls die Meßdaten und sonstige wichtigen Daten abgespeichert. Anschließend werden die einzelnen Daten und Datenformate zu einer einzigen Containerdatei zusammengefaßt. Dies erfolgt in der Regel mit einem programmgesteuerten Prozessor.

Die Verschlüsselung kann beispielsweise mit einer sogenannten "Checksumme" erfolgen. Unter dem Begriff "Checksumme" wird ein Betrag verstanden, der sich aus der Addition verschiedener oder auch aller Datenwerte der Containerdatei ergibt. Die Datei setzt sich aus binär dargestellten Datenwerten zusammen. Diese Datenwerte können an beliebigen Stellen oder Adressen der Datei vorliegen. Die Adressen der Datenwerte werden vor der Ermittlung der Datenwerte festgelegt und mit der "Checksumme" verknüpft, um später die entsprechenden Werte wieder zuordnen zu können. Die "Checksumme" samt Adressenzuordnung wird an eine bestimmte Stelle in die Datei geschrieben und kann wiederum mit Hilfe von mathematischen und geheimen Algorithmen codiert werden.

Werden nun Manipulationen durch Unbefugte an der Datei vorgenommen, so stimmt die neu ermittelte Checksumme mit der alten nicht mehr überein. Da sich solche "Checksummen" aber ebenfalls manipulieren lassen, ist durch die Verschlüsselung mit einem mathematischen Algorithmus eine Manipulation der "Checksumme" praktisch ausschließbar. Will ein Unbefugter die Datei unbemerkt verändern, so muß er zunächst den mathematischen Algorithmus kennen um die Checksumme manipulieren zu können und anschließend muß er wissen, welche Datenwerte für die "Checksumme" verwendet werden.

Damit eine solche Manipulation jederzeit ausgeschlossen werden kann, muß die Verschlüsselung der Daten praktisch zum Zeitpunkt und am Ort des Entstehens erfolgen. Werden nämlich die Daten vor der Verschlüsselung erst noch durch Datenleitungen, über Disketten oder andere Transportmedien transportiert, so kann eine Veränderung der Daten dem Transportweg nicht ausgeschlossen werden.

Als vorteilhafte Ausgestaltung der Erfindung hat sich erwiesen, wenn bei der erfindungsgemäßen digitalen Bildspeichereinrichtung als Bilderzeuger eine Digitalkamera verwendet wird, weil die Bilddaten direkt als digitale Bilder vorliegen und sehr leicht verarbeitet werden können.

Eine erfindungsgemäße Bildspeichereinrichtung läßt sich vorteilhafterweise bei allen "Kameras" verwenden, bei denen die digitalen Bilder eine spätere Beweiskraft antreten müssen. Als besonders geeignet hat sich daher erwiesen, wenn die digitale Bildspeichereinrichtung in einer Verkehrsüberwachungsanlage (10) angeordnet ist.

Kostengünstige Vorteile erhält man durch Verwendung einer handelsüblichen Rechnereinheit als Bild- und Datenverarbeitungsmittel. Solche herkömmlichen Bauteile sind im Handel günstig zu erstehen. Diese Rechnereinheit läßt sich gleichzeitig zur Steuerung der Bildspeichereinrichtung benutzen. Weiterhin kann sie auch durch einen entsprechenden Programmcode als Codiereinheit zur Verschlüsselung der Containerdatei vorgesehen sein.

Weitere Vorteile ergeben sich aus dem Gegegenstand der Unteransprüche.

### Kurze Beschreibung der Zeichnung

- Fig. 1: zeigt eine Verkehrsüberwachungseinrichtung an einer Kreuzung, bei der eine erfindungsgemäße Bildspeichereinrichtung eingesetzt wird.
- Fig. 2: zeigt als schematische Prinzipskizze den Aufbau einer erfindungsgemäßen Bildspeichereinrichtung einer Verkehrsüberwachungseinrichtung
- Fig.3: zeigt den prinzipiellen Ablauf des erfindungsgemäßen Verfahrens

### Bevorzugtes Ausführungsbeispiel

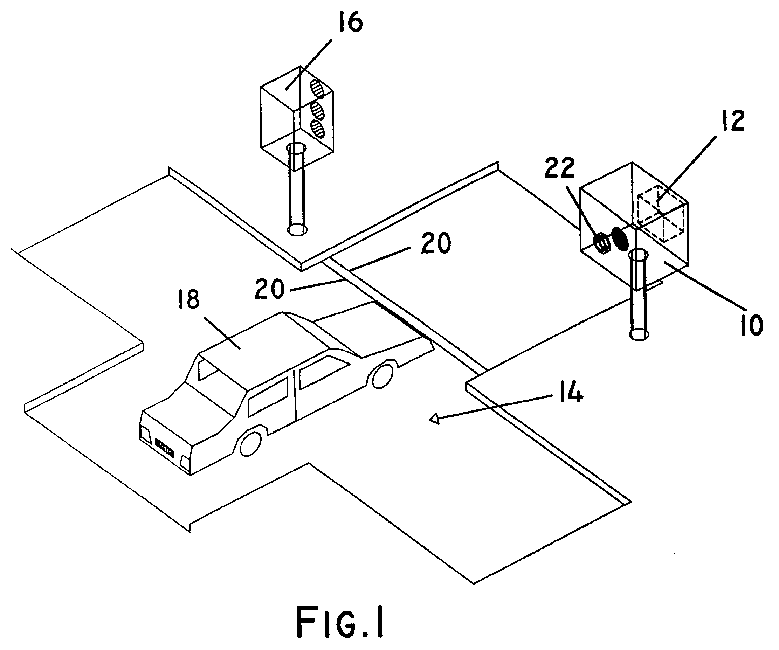

In Fig.1 ist mit 10 eine Verkehrsüberwachungsanlage bezeichnet, bei der eine erfindungsgemäße digitale Bildspeichereinrichtung 12 vorgesehen ist, die beispielhaft an einer geeigneten Stelle einer Straßenkreuzung 14 aufgestellt ist. An der Straßenkreuzung 14 ist weiterhin eine Ampel 16 zur Regelung des Verkehrs postiert. Ein Fahrzeug 18 hat bei Rot die Ampel 16 überfahren. Kontakte 20 werden bei Rotschaltung der Ampel 16 aktiviert. Die Verkehrsüberwachungsanlage 10 löst im aktivierten Zustand eine Digitalkamera 22 aus. Die Digitalkamera 22 erfaßt das Bild des Fahrzeugs 18 des Verkehrssünders.

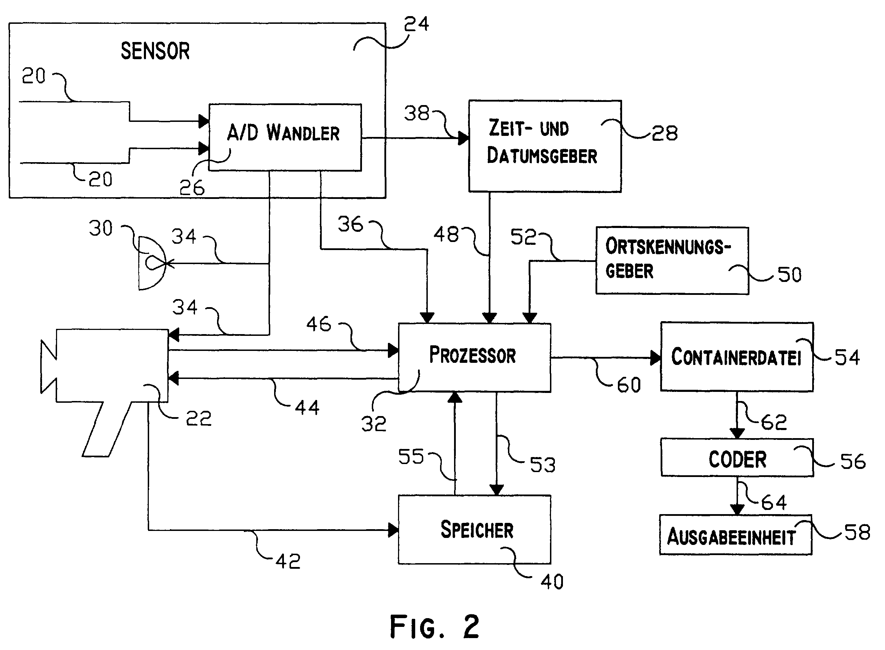

In Fig.2 ist als schematische Prinzipskizze der Aufbau einer erfindungsgemäßen Bildspeichereinrichtung 12 der Verkehrsüberwachungseinrichtung 10 dargestellt. Ein Sensor 24, der aus Kontakten 20 und einem Analog-Digital-Wandler 26 besteht, liefert im aktivierten Zustand ein digitales Signal sowohl an die Digitalkamera 22, einen Zeit- und Datumsgeber 28, ein Blitzlichteinheit 30 als auch einen programmgesteuerten Prozessor 32. Die Signalübertragung wird mit Pfeilen 34, 36, 38 angedeutet. Diese werden nun je nach Bedarf zeitverzögert aktiviert. Die Blitzlichteinheit 30 wird ausgelöst und dem Prozessor 32 wird mitgeteilt, das sein Programm zur Bildverarbeitung gestartet werden kann.

Die Digitalkamera 22 erfaßt den Verkehrssünder und überträgt nun die ensprechend digital codierten Bilddaten in einen Speicher 40, was mit Pfeil 42 dargestellt wird. Wenn die Bilddaten in dem Speicher 42 vollständig abgelegt sind, initialisiert der Prozessor die Digitalkamera 22, um in Bereitschaft für eine neue Aufnahme zu sein. Dies soll mit Pfeilen 44 und 46 angedeutet sein. Gleichzeitig liefert der Zeit- und Datumsgeber 28 entsprechende Daten an den Prozessor, die ebenfalls in dem Speicher 40 abgelegt werden. Dies wird mit Pfeil 48 in Fig. 2 dargestellt. Weiterhin wird von dem Prozessor 32 eine Ortskennung aus dem Ortskennungsgeber 50 ausgelesen und ebenfalls in dem Speicher 40 abgelegt. Pfeil 52 deutet das Auslesen der Ortskennung an. Pfeile 53 und 55 symbolisieren die Kommunikation des Prozessors 32 mit dem Speicher 40.

Die in dem Speicher 40 abgelegten Meß- und Bilddaten werden mit Hilfe des Prozessors 32 zu einer Containerdatei 54 verknüpft. Ein Coder 56 verschlüsselt nun diese Containerdatei 54. Die Verschlüsselung der Containerdatei kann auch durch den Prozessor 32 erfolgen. Die Verschlüsselung kann, wie bereits erläutert mit einer sogenannten "Checksumme" erfolgen. Die "Checksumme" samt Adressenzuordnung wird an eine bestimmte Stelle in die Datei geschrieben und kann wiederum mit Hilfe von mathematischen und geheimen Algorithmen codiert werden.

Anschließend wird die verschlüsselte Containerdatei 54 an eine Ausgabeeinheit 58 gegeben, von wo aus sie entweder auf magnetischen Speichermedien gespeichert oder über Datenleitungen weitergegeben werden. Pfeil 60 deutet die Erstellung der Containerdatei 54 an. Pfeile 62 und 64 symbolisieren die Weitergabe der Containerdatei 54 bis hin zur Ausgabeeinheit 58. Um einen unbefugten Datenzugriff zu verhindern müssen die Erzeugung von Bild- und Meßdaten und Verschlüsselung der Containerdatei 54 in der Bildspeichereinrichtung 12 erfolgen. Vorher muß vermieden werden, daß ein Zugriff von außen erfolgen kann.

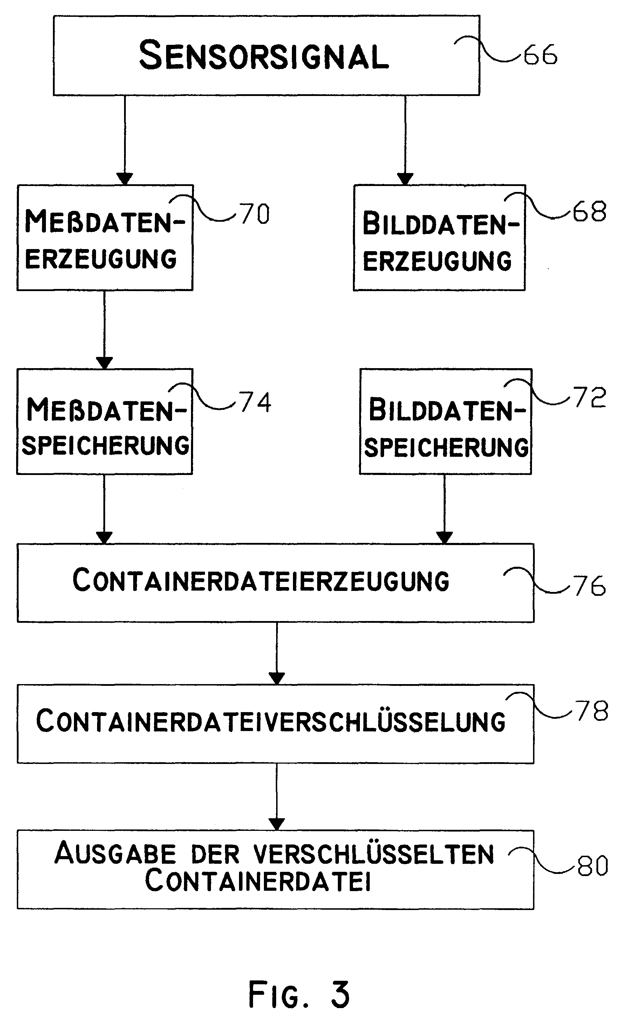

Fig. 3 zeigt schematisch den prinzipiellen Ablauf als Blockbild des erfindungsgemäßen Verfahrens. Das Sensorsignal 66 löst die Ereignisse Bilderzeugung 68 und Meßdatenerzeugung 70 aus. Die Bild- und Meßdaten werden anschließend in dem Speicher 40 gespeichert, was mit den Blöcken 72 und 74 dargestellt wird. Aus den gespeicherten Bild- und Meßdaten wird schließlich die Containerdatei 54 erzeugt. Die entsprechenden Daten werden dazu zusammengefaßt. Die Containerdateierzeugung wird in dieser Darstellung mit 76 bezeichnet. Die Containerdatei 54 wird danach in dem Coder 56 verschlüsselt, was mit Block 78 symbolisiert wird. Erst wenn die Containerdatei 54 verschlüsselt ist, so daß sie manipulationssicher ist, kann die Ausgabe der verschlüsselten Containerdatei 54 erfolgen. Dies wird mit Block 80 in Fig. 3 dargestellt

## Patentansprüche

1. Digitale Bildspeichereinrichtung (12), enthaltend
a) einen Bilderzeuger (22) zum Erzeugen digitaler Bilddaten,
b) Datenerzeuger (24; 28; 50) zum Erzeugen von zu den Bilddaten korrelierenden digitalen Daten,
c) einen Bild- und Datenspeicher (40),
d) Bild- und Datenverarbeitungsmittel (32),
**gekennzeichnet durch**
d) Mittel (32) zum Zusammenfassen der digitalen Bilddaten mit den korrelierenden digitalen Daten in einer digitalen Containerdatei (54),
f) Codiermittel (56) zum verschlüsseln dieser Containerdatei (54) in der digitalen Bildspeichereinrichtung (12).

2. Digitale Bildspeichereinrichtung (12) nach Anspruch 1, **dadurch gekennzeichnet, daß** der Bilderzeuger als Digitalkamera (22) ausgebildet ist.

3. Digitale Bildspeichereinrichtung nach einem der Ansprüche 1 oder 2, **dadurch gekennzeichnet, daß** die digitale Bildspeichereinrichtung in einer Verkehrsüberwachungsanlage (10) angeordnet ist.

4. Digitale Bildspeichereinrichtung (12) nach einem der Ansprüche 1 bis 3, **gekennzeichnet durch** eine Rechnereinheit (32) als Bild- und Datenverarbeitungsmittel.

5. Digitale Bildspeichereinrichtung (12) nach einem der Ansprüche 1 bis 4, **dadurch gekennzeichnet, daß** eine Rechnereinheit (32) als Steuer und/oder Codiereinheit vorgesehen ist.

6. Verfahren zur Sicherung von digitalen Bilddaten und korrelierenden digitalen Daten in einer Bildspeichereinrichtung (12) **dadurch gekennzeichnet, daß**
a) die digitalen Bilddaten und die korrelierenden digitalen Daten in eine Containerdatei zusammengefaßt (54) werden
b) diese Containerdatei (54) veschlüsselt wird.

7. Verfahren nach Anspruch 6, **dadurch gekennzeichnet, daß** eine Checksumme von der Containerdatei (54) zur Sicherung gebildet wird.

8. Verfahren nach Anspruch 7, **dadurch gekennzeichnet, daß** ein Verschlüsselungsalgorithmus für die Checksumme zur Sicherung der Checksumme gebildet wird.
